(19) **Europäisches Patentamt / European Patent Office / Office européen des brevets**

(11) **EP 3 237 093 B1**

(12) **FASCICULE DE BREVET EUROPEEN**

(45) Date de publication et mention de la délivrance du brevet:
**31.10.2018 Bulletin 2018/44**

(51) Int Cl.:
*C08F 265/06* *(2006.01)*    *B01D 53/02* *(2006.01)*
*C08F 2/24* *(2006.01)*

(21) Numéro de dépôt: **15817469.8**

(22) Date de dépôt: **03.12.2015**

(86) Numéro de dépôt international:
**PCT/FR2015/053311**

(87) Numéro de publication internationale:
**WO 2016/102794 (30.06.2016 Gazette 2016/26)**

(54) **UTILISATION DE REVÊTEMENTS À BASE DE DISPERSIONS AQUEUSES DE POLYMÈRE Á STRUCTURE COEUR/ÉCORCE POUR LE CAPTAGE DE COMPOSÉS ORGANIQUES VOLATILS COMME LES ALDÉHYDES**

VERWENDUNG VON BESCHICHTUNGEN AUS WÄSSRIGEN POLYMERDISPERSIONEN MIT KERN-HÜLLE-STRUKTUR ZUR ERFASSUNG VON FLÜCHTIGEN ORGANISCHEN VERBINDUNGEN WIE ETWA ALDEHYDEN

USE OF COATINGS MADE FROM AQUEOUS POLYMER DISPERSIONS HAVING A CORE/SHELL STRUCTURE FOR CAPTURING VOLATILE ORGANIC COMPOUNDS SUCH AS ALDEHYDES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463089**

(43) Date de publication de la demande:
**01.11.2017 Bulletin 2017/44**

(73) Titulaire: **Arkema France**
**92700 Colombes (FR)**

(72) Inventeurs:
• **BOONE, Alain**
**60140 Verderonne (FR)**
• **ROIDOT, Chantal**
**75010 Paris (FR)**
• **BEURDELEY, Patricia**
**95160 Montmorency (FR)**
• **FOURNIER, Frédéric**
**75014 Paris (FR)**

(74) Mandataire: **Killis, Andréas**
**ARKEMA France**
**Département Propriété Industrielle**
**420, rue d'Estienne d'Orves**
**92705 Colombes Cedex (FR)**

(56) Documents cités:
| | |
|---|---|
| EP-A1- 2 496 649 | EP-A1- 2 808 038 |
| WO-A1-2011/009560 | WO-A1-2014/191573 |
| US-A- 4 427 836 | US-A- 4 468 498 |
| US-A- 5 527 613 | US-A1- 2008 134 893 |

EP 3 237 093 B1

**Description**

La présente invention concerne l'utilisation d'une dispersion aqueuse de polymère spécifique, en particulier dudit polymère issu de cette dispersion, laquelle dispersion a des particules de polymère structurées en coeur/écorce avec des phases de polymère respectives dure/molle pour le captage et piégeage irréversible des composés organiques volatils tels que aldéhydes, cétones ou amines et en particulier desdits composés aldéhydes et plus particulièrement du formol. Ledit polymère de ladite dispersion, porteur de groupements fonctionnels réactifs avec lesdits composés organiques volatils, peut être utilisé pour ce captage, en particulier dans l'air intérieur d'une pièce d'habitation, sous forme de film ou de revêtement issu de ladite dispersion, de préférence sous forme de vernis ou de peinture, plus préférentiellement sous forme de peinture intérieure. L'objectif est de réduire le taux desdits composés volatils par un piégeage irréversible et plus particulièrement l'assainissement de l'air intérieur des bâtiments, en particulier des habitations ou des lieux de travail où lesdits produits ou composés organiques volatils (COV) peuvent être présents par diverses origines.

Dans le domaine des peintures, en particulier des peintures décoratives, l'amélioration de la qualité de l'air est une question importante à considérer dans le développement de nouveaux produits. Des mesures du taux de composés organiques volatils dans l'air sont contrôlées et sont associées à des labels ou des réglementations spécifiques en fonction des pays. Par le biais du revêtement, une action de capture ou captage et piégeage de molécules organiques volatils peut permettre de diminuer les taux de certains composés organiques volatils dans l'air intérieur, comme les aldéhydes, cétones ou amines et en particulier le captage de composés aldéhydes et plus particulièrement du formol. Le polymère utilisé selon la présente invention a le rôle de liant dans les revêtements et comporte au moins une fonction réagissant de manière irréversible avec les fonctions desdits produits organiques volatils, en particulier aldéhydes.

WO 2008/073212 décrit l'utilisation de polymères fonctionnalisés avec des groupements acétoacétate pour le revêtement d'un filtre pour piéger les aldéhydes. Les polymères décrits sont des polymères de polycondensation comme des polyesters ou des polymères en dispersion aqueuse obtenus par polymérisation en émulsion mais avec des particules de polymère non structurées.

EP 2 496 649 décrit des compositions filmogènes en dispersion aqueuse ou en solution dans un solvant, renfermant un agent apte à piéger le formaldéhyde, ledit agent étant sélectionné parmi les composés à méthylène actif. Ledit additif n'est pas greffé sur un polymère mais est soluble ou dispersé dans ladite composition.

WO 2014/191573 décrit un liant pour revêtement comprenant un polymère portant une fonction fixatrice de formaldéhyde par réaction avec le formaldéhyde présent dans l'air. Ledit polymère peut être un polyester, alkyde, polyuréthane, polyamide, polyacrylate, polyvinyl alcool ou résine époxy. Il décrit également un procédé d'assainissement de l'air en utilisant un revêtement à base dudit liant. L'exemple 2 de ce document décrit la préparation d'un liant polymère acrylique en émulsion et fonctionnalisé en groupements acétoacétoxy, mais ne décrit nullement les performances. Ce document ne décrit nullement, ni ne suggère l'utilisation de dispersion spécifique de polymère avec particules structurées.

EP 2 808 038 décrit des peintures ou vernis pour assainir l'air en fixant le formaldéhyde avec comme principale caractéristique la présence d'un liant porteur d'une fonction fixatrice de formaldéhyde par réaction avec le formaldéhyde dans l'air. Cependant, il n'y a aucune spécification plus détaillée dudit liant, à part qu'il peut être une alkyde ou un polymère acrylique. Les compositions de peinture décrites sont insuffisantes en termes de nature, de composition et de structure dudit liant utilisé dans les exemples (aucun nom et aucune caractéristique donnée).

WO 2012/078886 décrit une méthode pour réduire le taux d'aldéhyde sur un substrat ou près d'un substrat par application sur ledit substrat d'une composition de réduction d'aldéhyde comprenant des composés fonctionnalisés amines de différents types (primaire, secondaire, tertiaire ou complexe d'amine). Selon des variantes de cette méthode, la composition peut comprendre en plus un polymère filmogène ou un autre composé avec un groupement acétoacétyle ou avec ledit polymère filmogène (en plus desdits composés aminés) comprend un groupement acétoacétyle et selon une autre variante, ledit polymère peut être en dispersion dans l'eau. Aucune dispersion aqueuse de polymère à particules structurées coeur/écorce n'est décrite ou suggérée par ce document pour améliorer les performances dudit liant.

Cependant, les dispersions aqueuses les plus proches, décrites dans l'état de la technique pour cette utilisation, sont non structurées et ont besoin d'amélioration de leurs performances, d'abord en termes d'efficacité de captage desdits composés à capter et en particulier des aldéhydes comme le formol. Encore plus particulièrement, les performances propres du revêtement doivent être suffisantes et bonnes, en particulier en termes de filmification homogène et reproductible et en termes d'absence de blocking après filmification, sans défaut de filmification, ni de collant sur le film obtenu.

La présente invention démontre en particulier l'importance et l'intérêt de la morphologie spécifique de la particule de polymère et de la concentration des fonctions permettant le captage du formol par réaction irréversible, dans la phase continue issue du film obtenu à partir de particules de polymère structuré coeur/écorce avec phases respectives P1/P2 dure/molle.

La fonction permettant la réaction avec les fonctions des composés organiques volatils à capter de manière irréversible par réaction, en particulier des aldéhydes, est apportée par un monomère fonctionnel porteur d'un groupement fonctionnel parmi un groupement uréido ou un groupement ayant un hydrogène mobile en alpha d'un carbonyl cétonique aussi appelé à « méthylène actif » tel qu'un groupement diacétone ou un groupement acétoacétoxy et doit être présent exclusivement dans la phase molle P2 qui doit être également la phase continue lors de la formation du film au séchage avec un % en poids d'au moins 40% et jusqu'à 85% et de préférence cette phase molle P2 étant majoritaire en poids par rapport à la phase dure P1, c'est-à-dire avec la phase polymère P2 représentant plus de 50% et jusqu'à 85% du poids total P1 + P2.

Les fonctions dudit polymère permettant la réaction avec les fonctions desdits composés organiques volatils, en particulier les fonctions aldéhydes, sont ainsi plus concentrées et plus accessibles dans la phase molle d'écorce P2, car elle peut être beaucoup plus molle (selon Tg Fox) qu'il n'est acceptable dans une particule non structurée (non structurée en coeur/écorce) sinon elle devient très collante. Ainsi, le captage du composé volatil organique en question et en particulier des aldéhydes et plus particulièrement du formol en sera donc significativement amélioré et plus important, comme ceci est démontré par la présente invention dans la partie expérimentale, en comparaison par rapport à l'utilisation d'une dispersion de polymère représentative de l'état de la technique cité ci-haut (dispersion non structurée).

L'objet de la présente invention est l'utilisation d'une dispersion aqueuse de polymère, en particulier du polymère issu de ladite dispersion, pour le captage et le piégeage irréversible d'au moins un composé volatil organique porteur d'une fonction parmi aldéhyde, cétone ou amine, de préférence composé organique volatil porteur d'une fonction aldéhyde, avec ladite dispersion ayant une température minimum de filmification TMF de 0 à 50°C, de préférence de 0 à 40°C mesurée selon la norme ISO 2115 et comprenant des particules de polymère structurées en coeur/écorce P1/P2 dur/mou, avec :

- P1 étant la phase de polymère dur en coeur de ladite particule, avec une température de transition vitreuse Tg1 allant de 60 à 120°C, de préférence de 60 à 100°C et ladite phase P1 comprenant dans sa structure des unités issues d'au moins un monomère M1 possédant au moins deux insaturations éthyléniques copolymérisables et ayant une fonction d'agent réticulant et des unités issues d'au moins un monomère M2 éthyléniquement insaturé porteur d'au moins une fonction acide carboxylique et/ou anhydride carboxylique,
- P2 étant la phase de polymère mou en écorce ayant une température de transition vitreuse Tg2 allant de -20 à 40°C, de préférence de -20 à 30°C, plus préférentiellement de -20 à 20°C avec P2 représentant de 40 à 85% et de préférence de plus de 50 % et jusqu'à 85% en poids du poids total de P1 + P2 et comprenant dans sa structure, des unités issues d'au moins un monomère M3 porteur d'une insaturation éthylénique polymérisable et en plus d'un groupement fonctionnel uréido ou d'un groupement fonctionnel possédant un hydrogène mobile en alpha d'un carbonyle cétonique.

Les valeurs de Tg des polymères P1 (Tg1) et P2 (Tg2) sont calculées selon la loi (ou relation) de Fox, selon la relation précise (1) suivante :

$$1/Tg = \Sigma_i \ x_i/Tg_i \ . \qquad (1)$$

avec Tg étant la valeur à calculer de température de transition vitreuse du polymère considéré, en °K
$x_i$ : fraction en poids dans ledit polymère du composant monomère i avec $\Sigma_i \ x_i = 1$
$Tg_i$ : température de transition vitreuse en °K de l'homopolymère dudit monomère i.

Lesdits composés organiques volatils selon la présente invention ont une température d'ébullition (ou point d'ébullition) sous pression atmosphérique inférieure à 250°C et de préférence inférieure à 100°C.

Ledit groupement fonctionnel dudit monomère M3 est sélectionné de préférence parmi les groupements uréido, acétoacétoxy ou diacétone.

Plus particulièrement, ledit monomère M3 est sélectionné parmi la diacétone acrylamide (DAAM), l'acétoacétoxy éthyl (méth)acrylate (AAEM), l'acétoacétoxy propyl (méth)acrylate (AAPM) ou la N-(2-(méth)acryloyloxyéthyl)) éthylène urée (ou uréido éthyl (méth)acrylate : UMA), en particulier l'acétoacétoxy éthyl (méth)acrylate (AAEM) et la diacétone acrylamide (DAAM) et plus particulièrement l'acétoacétoxy éthyl (méth)acrylate (AAEM).

Selon une autre option préférée, le taux dudit monomère M3 porteur dudit groupement fonctionnel, de préférence diacétone, acétoacétoxy ou uréido, plus préférentiellement acétoacétoxy ou diacétone et encore plus préférentiellement acétoacétoxy, varie de 50 à 1000 et de préférence de 100 à 700 mmoles par kg dudit polymère (P1 + P2). Ledit monomère M3 est présent dans ladite phase P2 à un taux en poids de 1 à 25%, de préférence de 2,5 à 25% et plus préférentiellement de 5 à 15% par rapport au poids total de P1 + P2.

Selon une option particulièrement préférée, ladite phase P2 comprend en plus, au moins un agent de transfert sélectionné parmi les mercaptans hydrophiles, en particulier portant un groupement ionique. Comme exemple d'un tel agent, on peut citer l'acide mercaptopropionique.

Encore plus particulièrement, ladite phase P2 comprend au moins un deuxième agent de transfert sélectionné parmi les mercaptans hydrophobes avec un rapport en poids d'agent hydrophile sur agent hydrophobe supérieur à 1 et de préférence supérieur à 1,5. Le taux global desdits premier et deuxième agents de transfert peut représenter en poids de 0,02 à 2% et de préférence de 0,05 à 1,5% par rapport au poids total des phases P1 + P2. Comme exemple d'agent de transfert hydrophobe, on peut citer le n-dodécylmercatptan.

Concernant les températures de transition vitreuse Tg1 et Tg2, elles sont calculées selon la relation de Fox. En particulier, la différence entre lesdites Tg1 et Tg2 varie de 20 à 140°C et de préférence de 30 à 115°C.

Lesdits monomères M1 et M2 de la phase P1 peuvent représenter un taux global en poids allant de 0,5 à 10% et de préférence de 1 à 8% du poids total de la phase P1 avec ledit monomère M2 représentant de 0,1 à 5% et de préférence de 0,2 à 4% en poids de ladite phase P1. Plus particulièrement, ladite phase P1 de polymère est constituée d'un polymère de semence P0 et d'un polymère P'1 complémentaire, signifiant complémentaire à P0 pour donner P1, avec la composition de ladite phase P0 étant exempte desdits monomères M1 et M2 et sur le reste de la composition de monomères (hormis M1 et M2), les compositions de P0 et P'1 pouvant être identiques ou différentes. La composition globale de la phase P1 correspond à la composition moyenne entre P0 et P'1.

Le monomère M1 de la phase P1 peut être choisi parmi les monomères :

- esters allyliques monofonctionnels ou multifonctionnels dérivés d'acides carboxyliques ou dicarboxyliques $\alpha,\beta$-insaturés tels que (méth)acrylate d'allyle, maléate de monoallyle ou de diallyle, tetrahydrophtalate de monoallyle ou de diallyle ou esters allyliques multifonctionnels d'acides di- ou polycarboxyliques saturés tels que phtalate de diallyle, trimésitate de triallyle ou autres monomères polyallyliques, tels que triallyl cyanurate
- les esters (méth)acryliques multifonctionnels de fonctionnalité d'au moins 2, tels que les di(méth)acrylates de polyalkylène glycol, tels que di(méth)acrylate d'éthylène glycol, di(méth)acrylate de tripropylène glycol, di(méth)acrylate de diéthylène glycol, les di(méth)acrylates d'alkylène diols ou polyols, de préférence avec alkylène allant de $C_2$ à $C_8$, tels que di(méth)acrylate de 1,6-hexanediol, di(méth)acrylate de 1,3-butylène glycol, di(méth)acrylate de 1,4-butanediol, di(méth)acrylate de néopentyl glycol, tri(méth)acrylate de trimethylol propane, et
- les polyvinylbenzènes, tels que le divinylbenzène ou trivinylbenzène,
- les divinyltoluènes,
- les divinylnaphtalènes.

Les monomères préférés selon M1 sont le (méth)acrylate d'allyle, butanediol di(méth)acrylate, hexanediol di(méth)acrylate.

Le monomère M2 de la phase P1 peut être choisi parmi les acides : (méth)acrylique fumarique, maléique, itaconique, vinylbenzoïque, crotonique ou isocrotonique et/ou leurs anhydrides et de préférence l'acide méthacrylique (AMA) et/ou l'acide acrylique (AA). L'AA et l'AMA sont les plus préférés.

Selon une variante particulière, la phase P2 peut comprendre également au moins un monomère M2 tel que défini ci-haut pour la phase P1, avec des taux respectifs en poids de M2 dans les phases P1 et P2 choisis de sorte que le rapport du taux en poids de M2 dans P1 sur le taux de M2 dans P2 varie de 1/1 à 1/10 et de préférence de 1/2 à 1/8.

Ladite phase P2 peut comprendre, en plus, au moins un monomère M4 porteur en plus de l'insaturation éthylénique polymérisable, d'au moins un groupement fonctionnel sélectionné parmi : hydroxy, amine, oxirane, phosphates, phosphonates ou phosphinates, amide, sulfate ou sulfonate, imide, aziridine, oxazoline ou imidazole, sous condition que le choix des monomères M4 soit réalisé de manière à éviter une réaction entre les différents groupements de monomères M4 ou entre les groupements des monomères M4 et les groupements des autres monomères. Comme exemples convenables de monomères M4, on peut donner les suivants :

- hydroxy, tel que porté par les hydroxyalkyl (méth)acrylates avec alkyl de $C_2$ à $C_4$ (comme le HEMA, HPMA),
- amine, tel que porté par les aminoalkyl (méth)acrylates ou aminoalkyl (méth)acrylamides, par exemple le MADAME (méthacrylate de diméthyl amino éthyle) ou le MATBAE (méthacrylate de t-butyl aminoéthyle),
- oxirane, tel que porté par le (méth)acrylate de glycidyle (comme le MAGLY),
- phosphates, phosphonates ou phosphinates, tels que portés par les phosphates ou phosphonates ou phosphinates d'hydroxyl alkyl (méth)acrylates et d'hydroxy alkyl éthoxylé et/ou propoxylé (méth)acrylate, amide, tel que le (méth)acrylamide,
- sulfate et sulfonate, tels que portés par les (méth)acrylate d'hydroxy alkylsulfonates (comme le méthacrylate d'hydroxy éthyl sulfonate) ou les (méth)acrylamide d'hydroxyalkyl sulfonates (comme l'acrylamide propane sulfonique acide) et leurs sels ou
- imide, tel que le maléimide ou
- aziridine, tel que porté par le méthacrylate de 1-(2-hydroxyéthyl), aziridine ou
- oxazoline ou imidazole, tels que portés par le méthacrylate de 2-éthyl(2-oxo-imidazolidin-1 yl,

sous condition que le choix de ces monomères M4 soit réalisé de manière à éviter une réaction ou une interaction entre groupements pendant la synthèse qui rendrait celle-ci impossible entre les différents groupements de monomères M4 ou entre les groupements des monomères M4 et les groupements des autres monomères.

Concernant la structure des monomères (ou composition des monomères) des phases polymères P1 et P2, elles peuvent être, soit à base de monomères purement acryliques et donc de structure pure acrylique (« acrylique » signifiant ici à la fois acrylique et/ou méthacrylique) ou bien, à base d'une structure mixte pouvant comprendre dans P1 et P2 mais de préférence en P1 (phase dure) des monomères vinyl aromatiques, plus particulièrement le styrène et/ou ses dérivés comme les vinyl toluènes ou bien le vinyl benzène et de préférence le styrène et/ou vinyl toluènes. Plus particulièrement, P1 peut comprendre de tels monomères vinyl aromatiques. Selon une autre variante, la phase P1 seule est purement acrylique et selon une autre variante la phase P2 seule est purement acrylique et selon une troisième variante les deux phases P1 et P2 sont purement acryliques et donc en conséquence ladite dispersion l'est (purement acrylique) aussi.

Les variantes les plus préférées de la dispersion de l'invention correspondent à :

- une phase P1 comprenant des monomères vinyl aromatiques avec une phase P2 étant purement acrylique, la dispersion étant dans ce cas de type styrène-acrylique ou
- une dispersion purement acrylique pour P1 et P2.

Ladite phase P1 peut comprendre et, de préférence, comprend un polymère de semence P0, avec P0 exempt de monomères M1 et M2 tels que définis ci-dessus, avec ladite phase P0 représentant en poids de 2 à 25% et de préférence de 5 à 20% du poids de ladite phase P1. Plus particulièrement, la phase P1 est obtenue avant ladite phase P2, laquelle phase P2 est obtenue par polymérisation des monomères correspondants à cette phase polymère, à une température inférieure ou égale et de préférence inférieure à Tg1 telle que définie ci-dessus. Encore plus préférentiellement, on se situe à une température (de polymérisation de P2) d'au moins 5 degrés inférieure à Tg1.

Selon une variante dans cette utilisation, ladite dispersion peut comprendre en dispersion avec les particules de polymère, au moins un composé comprenant au moins une fonction hydrazine ou hydrazide. Selon une option préférée, ladite dispersion ne comprend pas de tels additifs réactifs pour ladite utilisation.

De préférence, ledit composé organique volatil à capter ou à piéger, a une température d'ébullition sous pression atmosphérique inférieure à 250°C, plus préférentiellement inférieure à 100°C. Plus particulièrement, ledit composé organique volatil à capter ou à piéger est une aldéhyde parmi les aldéhydes en $C_1$ à $C_8$, qui peuvent être saturées ou insaturées et en particulier parmi le formol (ou formaldéhyde), l'acétaldéhyde, le propanal, l'acroléine (acrylaldéhyde), le butanal, le pentanal, l'hexanal, l'heptanal ou l'octanal, de préférence le formol, l'acétaldéhyde, l'acroléine, l'hexanal et plus préférentiellement le formol.

Selon une variante de la présente invention, ladite utilisation concerne le polymère issu de ladite dispersion telle que définie ci-haut et ledit polymère est sous forme de film ou sous forme de revêtement et en particulier sous forme de vernis ou de peinture, plus particulièrement sous forme de peinture.

L'utilisation selon l'invention de ladite dispersion sous forme de revêtement concerne plus particulièrement la protection et/ou la décoration de substrats, de préférence sélectionnés parmi le bois, le carton, le métal, le plastique, le plâtre, le béton, le fibrociment, le verre.

Plus particulièrement, ladite utilisation est celle du polymère issu de ladite dispersion telle que décrite ci-dessus et ledit polymère est utilisé sous forme de couche fine ou de revêtement appliqué sur un substrat, en particulier sur un substrat poreux ou fibreux. Un substrat poreux convenable peut être du plâtre, papier mural (peint ou à peindre) ou papier filtre ou carton ou bois ou panneau composite à renfort fibreux. Un substrat fibreux peut être un tissu de fibres ou un non tissé, éventuellement préimprégné d'un polymère thermoplastique. Ces deux types de substrats (poreux ou fibreux) sont caractérisés en particulier par la grande surface spécifique dudit substrat.

Selon une autre variante d'utilisation, ledit polymère issu de ladite dispersion est utilisé sous forme de sonde qualitative ou quantitative de détection dudit composé volatil, en particulier desdites aldéhydes et plus particulièrement du formol.

L'utilisation selon la présente invention s'applique en particulier aux revêtements décoratifs.

Elle peut aussi s'appliquer aux revêtements de protection industriels.

Selon une préférence particulière, l'utilisation de ladite dispersion de polymère ou dudit polymère issu de ladite dispersion concerne le captage desdites aldéhydes, en particulier du formol, dans l'atmosphère au contact direct de la surface dudit polymère, plus particulièrement sous forme de couche fine de polymère ou de revêtement.

Selon une autre option alternative, ladite utilisation concerne le captage du formol dégagé par des revêtements appliqués comme sous-couche ou première couche par rapport au revêtement capteur, en particulier avec ledit revêtement capteur, issu de ladite dispersion de polymère, étant utilisé comme revêtement de surface, c'est-à-dire en contact avec l'air.

Selon une autre option, ladite utilisation concerne le captage du formol dégagé par un substrat avec ce dernier étant revêtu d'un revêtement capteur issu de ladite dispersion de polymère. Plus particulièrement, ledit substrat dégageant du formol peut être choisi parmi : bois aggloméré ou en sandwich ou contre-plaqué et collé par des colles urée-formol ou mélamine-formol, textile traité ou fibres traitées avec une composition de traitement génératrice de formol. Des compositions de traitement de textile ou de fibres peuvent par exemple comprendre des groupements méthylols, en particulier des groupements fonctionnels N-méthylols, générateurs d'émissions de formol.

Selon une autre variante d'utilisation selon la présente invention, ladite utilisation concerne le captage du formol dégagé par un premier substrat « générateur», signifiant « générateur de formol » et dans ce cas est appliqué en contact avec ledit substrat « générateur », un deuxième substrat « capteur », signifiant «capteur de formol », imprégné ou revêtu par ladite dispersion aqueuse de polymère ou imprégné ou revêtu par le polymère issu de ladite dispersion. Selon cette variante, ledit deuxième substrat « capteur » en contact avec ledit premier substrat « générateur » peut être choisi parmi les : non tissés, tissus de fibres organiques ou minérales, en particulier tissus de fibres de verre, pour l'isolation ou pour la rénovation des murs intérieurs.

Selon une autre variante d'utilisation selon la présente invention, elle concerne l'imprégnation de filtres à air ou des filtres à fumée par ladite dispersion aqueuse de polymère. Comme exemple particulier de filtre à fumée, on peut considérer un filtre de cigarette.

Les exemples suivants sont donnés à titre d'illustration expérimentale de la présente invention et de ses performances, sans limitation aucune de sa portée par lesdits exemples.

## PARTIE EXPERIMENTALE

### 1) Référence des essais réalisés : voir tableau 1 ci-dessous

Deux dispersions ont été réalisées, une selon l'invention (essai 1) et une comparative hors invention (essai 2). La dispersion selon l'invention de l'essai 1 est comparable à celle de l'essai 2 hors invention avec comme différence le fait que la dispersion selon l'essai 1 a des particules de polymères structurées en coeur/écorce comme indiqué au tableau 1 et celle de l'essai 2 est une dispersion courante sans particules structurées avec la composition des deux essais ajustée de sorte à avoir la même température de filmification avec une TMF de 5°C. La phase P1 dans le cas de l'essai 1 comprend comme monomère M1 le HDDA (2,5% en poids vs P1) et comme monomère M2 l'AMA (1,6% en poids vs P1).

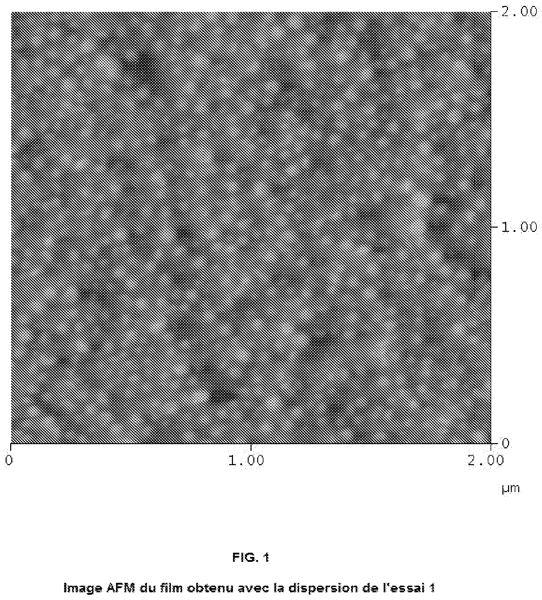

La structure coeur/écorce est démontrée par microscopie AFM sur le film obtenu par coalescence de la dispersion de l'essai 1, avec l'image de la figure 1 montrant la phase dure du coeur apparaissant en clair et la phase continue coalescée autour desdits coeurs, correspondant à l'écorce apparaissant en sombre.

Des tests de collant par toucher au doigt sur les films obtenus montrent que le film obtenu avec la dispersion à particules structurées de l'essai 1 ne présente aucun collant et que le film obtenu avec la dispersion de l'essai 2 présente un collant au doigt (après au moins 24 h de séchage).

Tableau 1 : caractéristiques des essais réalisés

| Référence essai | 1 | 2 |
|---|---|---|
| Type d'essai | invention | Hors invention (comparatif) |
| % en poids AAEM (monomère M3 vs poids global de polymère) | 10* | 10 |
| % poids P1 | 40 | - |
| % poids P2 | 60 | - |
| Total | 100 | 100 |
| Tg1 Fox vs P1 (°C) | 70 | - |
| Tg2 Fox vs P2 (°C) | -10 | - |
| Tg globale Fox (°C) | 17** | -6 |
| MFT mesurée ISO 2115 (°C) | 5 | 5 |
| * 16,6% par rapport à P2 <br> ** Tg globale calculée sous l'hypothèse de particule non structurée avec phases P1 et P2 miscibles | | |

Tableau 2 : Matières premières utilisées dans la synthèse des dispersions des essais 1 et 2

| Constituant | Fonction technique | Nature chimique | Fournisseur |
|---|---|---|---|
| Aérosol® A102 | Tensio-actif | Sulfosuccinate d'alcool gras éthoxylé, sel de sodium ($C_{10}$-$C_{12}$) solution à 30% dans l'eau | Cytec |
| Disponil® FES 32 | Tensio-actif | Sulfate d'alcool gras polyglycol éther, sel de sodium solution à 31% dans l'eau | Cognis |
| Tergitol® 15S9 | Tensio-actif | Alcool gras éthoxylé secondaire avec 9 OE, 100% | Dow |
| Emulan® TO 4070 | Tensio-actif | Alcool gras éthoxylé avec 40 OE, 70% | BASF |
| HDDA | Réticulant | Hexanediol diacrylate (HDDA) | Sartomer |
| ABu | Monomère | Acrylate de Butyle | Arkema |
| MAM | Monomère | Méthacrylate de Methyle | Arkema |
| AA | Monomère | Acide Acrylique | Arkema |
| AMA | Monomère | Acide Méthacrylique | Arkema |
| AAEM | Réticulant | AcétoAcétoxyEthyl Méthacrylate | Eastman |
| nDDM | Mercaptan | n-dodécylmercaptan | Acros |
| MPP | Mercaptan | Acide mercaptopropionique à 80% | Acros |
| $Na_2S_2O_8$ | Peroxyde | Persulfate de sodium | Aldrich |
| $Na_2S_2O_5$ | Réducteur | Métabisulfite de sodium | Prolabo |
| TBHP | Peroxyde | Ter-butyle hydroperoxyde à 70% | Aldrich |
| SFS | Réducteur | Formaldéhyde sulfoxylate de sodium | Bruggeman |
| NaOH | Neutralisation | Hydroxyde de sodium | Prolabo |
| Acticide MBS | Biocide | Solution aqueuse de méthylisothiazoline (MIT) et de benzisothiazolinone (BIT) (2,5% MIT/ 2,5% BIT) | Thor |

Toutes les valeurs de Tg calculées sont calculées selon la loi de Fox, comme indiqué déjà dans la description.
Les valeurs des Tg des homopolymères correspondant aux monomères utilisés, pour les besoins du calcul des Tg d'après la loi de Fox, sont données en °C, au tableau 2a) ci-dessous.

Tableau 2a) : Tg des homopolymères des monomères utilisés, pour la relation de Fox

| Monomère i | Abréviation | Tg (°C) |
|---|---|---|
| Acide acrylique | AA | 106 |
| Acide méthacrylique | AMA | 228 |
| Acrylate de butyle | ABu | -54 |
| Méthacrylate d'acétoacétoxyéthyle | AAEM | 18 |
| Méthacrylate de méthyle | MAM | 105 |

La TMF (température minimale de filmification) est mesurée selon la norme ISO 2115.
La viscosité citée est une viscosité Brookfield à 10 rpm selon la norme ISO 2555.
L'extrait sec de la dispersion aqueuse est mesuré selon la norme ISO 3251.
La taille des particules est mesurée par Spectroscopie de Corrélation de Photons (PCS), à l'aide d'un appareillage N4+ de Beckman Coulter. L'échantillon est dilué (3 à 5 gouttes d'émulsion dans 50 ml d'eau) dans une cuve en polystyrène à l'aide d'eau désionisée sur un filtre en acétate de cellulose de 0,22 $\mu$m. La taille des particules est mesurée à une température de 25°C, sous un angle de mesure de 90° et à une longueur d'onde du laser de 633 nm.

L'image en microscopie AFM est réalisée sur un appareil : AFM Nanoscope IIIa (Digital Instrument Veeco) en mode tapping sur film obtenu après dépôt d'une goutte de dispersion aqueuse selon essai 1, diluée 100 fois sur une lamelle de mica et séchage d'au moins 24 h à l'ambiante.

## 2) <u>Mode opératoire essai 1</u>

### <u>Matériel utilisé</u>

Un réacteur en verre de 3 l en contenance interne, équipé d'une double enveloppe, muni d'une agitation efficace (vortex), d'un réfrigérant à triple flux, d'un contrôle et d'une régulation de la température matière est utilisé. Le réacteur comporte le nombre de raccords d'introductions nécessaires à l'introduction séparée des différents composants, ainsi qu'une introduction dédiée à l'inertage à l'azote de l'ensemble (mise sous atmosphère inerte d'azote). L'étanchéité est vérifiée avant chaque synthèse. L'installation est équipée d'un système permettant de contrôler les débits d'introduction des composants.

### <u>Préparation de la charge initiale en pied de cuve</u>

14,1 g de Disponil® FES 32 sont solubilisés dans 327 g d'eau déminéralisée en pied de cuve. La température du pied de cuve est portée à 85°C.

### <u>Préparation de la semence P0</u>

Mélanger 6,9 g de MAM + 6,9 g d'ABu.

### <u>Préparation de la préémulsion P'1</u>

4,2 g d'Aérosol® A102, 7,1 g de Disponil® FES 32 sont dispersés dans 44,1 g d'eau déminéralisée sous bonne agitation.
Sont ajoutés tour à tour et sous bonne agitation :

- 130,9 g de MAM
- 18,5 g d'ABu
- 4,2 g d'HDDA
- 2,8 g d'AMA

La préémulsion ainsi formée est blanche et stable et elle sera maintenue sous légère agitation. Elle sera utilisée pour la synthèse du coeur P1 de la particule, composé de P0 et P'1 (P1 = P0 + P'1).

### <u>Préparation de la préémulsion P2</u>

4,2 g d'Aérosol® A102, 9,1 g de Tergitol® 15S9 sont dispersés dans 74,4 g d'eau sous bonne agitation. Sont ajoutés tour à tour et sous agitation :

- 70 g de MAM
- 135,7 g d'ABu

On obtient une préémulsion blanche et stable. 10% de cette préémulsion, soit 29,3 g seront prélevés et utilisés pour réaliser un ensemencement avant la coulée de P2. Puis, sont ajoutés dans la préémulsion, toujours sous bonne agitation :

- 42,4 g d'AAEM
- 8,5 g d'AA
- 1,06 g de MPP
- 0,08 g de nDDM

Cette préémulsion, P2, blanche et stable, servira à la synthèse de l'écorce (P2) de la particule.

**Préparation des solutions de catalyseurs**

1,48 g de persulfate de sodium sont solubilisés dans 28,2 g d'eau.
0,42 g de métabisulfite de sodium sont solubilisés dans 3,8 g d'eau.
0,6 g de TBHP (70%) sont solubilisés dans 2,65 g d'eau.
0,34 g de SFS sont solubilisés dans 8,1 g d'eau.

**Procédé de polymérisation**

i) Ensemencement PO

Le pied de cuve avec la charge initiale étant stable à 85°C, est introduit, pour l'ensemencement P0, le mélange précisé ci-haut de MAM et d'ABu. Une fois la température stabilisée, 70% de la solution de persulfate de sodium sont ajoutés. Le maximum d'exothermie marque la fin de cette étape, la taille de particule est d'environ 30 nm et la conversion est supérieure à 70%.

ii) Synthèse du coeur P1

L'introduction de la préémulsion P'1 dure 120 minutes, à une température de polymérisation de 85°C.

iii) Etape de cuisson thermique et refroidissement

La température est maintenue pendant 60 minutes à 85°C. A la fin de la cuisson thermique, le milieu réactionnel est refroidi à 65°C. La conversion est alors proche de 100%.

iv) Synthèse de l'écorce P2

A 65°C, l'ensemencement constitué de 29,3 g de fraction de P2 (sans monomères fonctionnels, ni agents de transfert) est introduit dans le réacteur. On mélange pendant au moins 5 min avant le début des introductions séparées :

- 100% restant de la seconde préémulsion P2
- 30% restant de la solution d'initiateur (persulfate de sodium)
- 100% de la solution d'activateur (métabisulfite de sodium)

Pendant les coulées qui durent 150 minutes, la température du milieu est maintenue à 65°C. Cette étape est suivie d'une post-cuisson d'une durée de 30 minutes à 65°C.

Traitement redox

Les solutions de TBHP et SFS sont ajoutées à 65°C en 30 minutes. Ce traitement redox est suivi d'une cuisson à 65°C pendant 30 minutes avant refroidissement à température ambiante.

v) Additions finales

A 30-35°C, le latex est neutralisé par addition de soude à pH 8 et post-additionné d'un biocide. Il est ensuite filtré sur toile de 100 $\mu$m. L'extrait sec est de 44,5%.
La taille de particule finale est d'environ 90 nm ; la viscosité est inférieure à 100 mPa.s ; la TMF mesurée est de 5°C.

**3) Mode opératoire de l'essai 2**

**Matériel utilisé**

Un réacteur de 3 l (contenance interne) en verre, équipé d'une double enveloppe, muni d'une agitation efficace (vortex), d'un réfrigérant à triple flux, d'un contrôle et d'une régulation de la température matière est utilisé. Le réacteur comporte le nombre de raccords d'introductions nécessaires à l'introduction séparée des différents composants, ainsi qu'une introduction dédiée à l'inertage à l'azote de l'ensemble. L'étanchéité est vérifiée avant chaque synthèse. L'installation est équipée d'un système permettant de contrôler les débits d'introduction des composants.

**Préparation de la charge initiale en pied de cuve**

33 g de Disponil® FES 32 sont solubilisés dans 802 g d'eau déminéralisée en pied de cuve. La température du pied de cuve est portée à 85°C.

**Préparation de la semence P0**

Mélanger 17,9 g de MAM + 17,9 g d'ABu.

**Préparation de la préémulsion P' complémentaire**

11 g d'Aérosol® A102, 29,3 g de Disponil® FES 32 et 23,6 g d'Emulan® TO 4070 sont dispersés dans 316,7 g d'eau déminéralisée sous bonne agitation.
Sont ajoutés tour à tour et sous bonne agitation :

- 356 g de MAM
- 565 g d'ABu
- 110 g d'AAEM
- 11 g d'HDDA
- 5,5 g d'AMA
- 16,5 g d'AA

La préémulsion P' ainsi formée est blanche et stable et elle sera maintenue sous légère agitation. Elle sera utilisée pour la synthèse de la particule de polymère P, composé de P0 et P' comme définis pour cet essai 2 (P = P0 + P').

**Préparation des solutions de catalyseurs**

3,9 g de persulfate de sodium sont solubilisés dans 73,2 g d'eau.
1,6 g de TBHP (70%) sont solubilisés dans 6,9 g d'eau.
0,9 g de SFS sont solubilisés dans 21,1 g d'eau.

**Procédé de polymérisation**

i) Ensemencement P0

Le pied de cuve avec la charge initiale étant stable à 85°C, est introduit, pour l'ensemencement P0, le mélange précisé ci-haut de MAM et d'ABu. Une fois la température stabilisée, 20% de la solution de persulfate de sodium sont ajoutés. Le maximum d'exothermie marque la fin de cette étape. La taille de particule est d'environ 40 nm et la conversion est supérieure à 70%.

ii) Synthèse de la particule de polymère P (non structurée)

L'introduction de la préémulsion P' dure 240 minutes à une température de polymérisation de 85°C. Conjointement, on introduit 71,1% de la solution de persulfate de sodium durant le même temps.

iii) Etape de consommation des monomères résiduels, de cuisson thermique et de refroidissement

Après la fin de l'introduction de la préémulsion P', on coule, toujours à 85°C, les 8,9% restants de la solution de persulfate de sodium. La température est maintenue pendant 20 minutes à 85°C. A la fin de la cuisson thermique, le milieu réactionnel est refroidi à 65°C. La conversion est alors proche de 100%.

iv) Traitement redox

Les solutions de TBHP et SFS sont ajoutées à 65°C en 30 minutes. Ce traitement redox est suivi d'une cuisson à 65°C pendant 30 minutes avant refroidissement à température ambiante.

v) Additions finales

A 30-35°C, le latex est neutralisé à pH 8 par addition de soude et post-additionné d'un biocide. Il est ensuite filtré sur toile de 100 $\mu$m. L'extrait sec est de 45,5%.

La taille de particule finale est d'environ 90 nm, la viscosité est inférieure à 200 mPa.s, la TMF mesurée est de 5°C.

**4) Evaluation de la performance de captage du formaldéhyde**

**4.1) Méthode de test**

La performance du produit testé à réduire, par captage la concentration en formaldéhyde dans l'air intérieur, est évaluée en utilisant la norme ISO 16000-23. ISO 16000-23 précise une méthode générale d'essai en laboratoire pour évaluer la réduction de concentration en formaldéhyde par des matériaux de construction sportifs. Elle est basée sur la méthode de la chambre de test telle que spécifiée dans la norme ISO 16000-9 où la chambre de test doit simuler les paramètres de la pièce de référence.

L'échantillon à tester est appliqué selon un facteur de charge spécifique et placé dans une chambre de test (l'échantillonnage, le transport et le stockage des échantillons à tester et la préparation des échantillons à tester étant spécifiés dans la norme ISO 16000-11).

L'air d'alimentation est dopé en formaldéhyde pour mesurer le flux de sorption et la masse de saturation par unité de surface. Le premier indique directement la performance des échantillons par rapport à la réduction de la concentration en formaldéhyde à un moment donné. La seconde (masse de saturation par unité de surface) se rapporte à la capacité d'un échantillon testé à maintenir cette performance.

Concrètement, à des intervalles de temps sélectionnés, un volume connu d'air est prélevé de la chambre de test. Le formaldéhyde est ainsi piégé et transformé en dérivé hydrazone par une cartouche remplie de gel de silice imprégné de 2,4-DNPH (2,4-dinitrophényl hydrazine). Le dérivé hydrazone stable formé est désorbé avec de l'acétonitrile et analysé par HPLC avec un détecteur ultraviolet (l'échantillonnage de l'air et les méthodes d'analyse pour la détermination du formaldéhyde sont spécifiés dans la norme ISO 16000-3).

Les résultats obtenus sont ensuite exprimés en concentration de formaldéhyde dans la chambre en $\mu$g/m3 et/ou en tant que flux de sorption en $\mu$g/m2 par heure.

La performance de l'échantillon à tester dans sa capacité de réduction de la concentration en formaldéhyde est évaluée en comparant la quantité de formaldéhyde trouvée dans la chambre contenant l'échantillon à tester à celle de la chambre vide (sans échantillon). La consommation de formaldéhyde FC par ledit échantillon testé (en %) peut ensuite être ainsi calculée (voir § 5.3) ci-dessous pour définitions des grandeurs mesurées).

**5.2) Conditions opératoires**

Paramètres de test dans la chambre d'émission :

Volume de la chambre : 119 l
Température : 23 $\pm$ 1°C
Humidité relative : 50 $\pm$ 5%
Taux de renouvellement d'air : 0,5 h$^{-1}$
Facteur de charge : 1 m$^2$/m$^3$

**Préparation de l'échantillon**

1 couche de revêtement à l'état humide (dispersion aqueuse) à 100 g/m$^2$.

Injection formaldéhyde : concentration constante dans la chambre durant la durée du test avec une concentration moyenne dans la chambre de 78 $\mu$g/m$^3$.

**Méthode d'analyse**

Méthode : ISO 16000-23, EN ISO 16000-3
Principe : HPLC-UV
Limite de détection formaldéhyde : 3 $\mu$g/m$^3$
Incertitude sur détection/analyse du formaldéhyde par HPLC-détecteur UV : $\pm$ 22%.

**5.3) Résultats**

Les résultats de consommation du formaldéhyde (FC) sont présentés au tableau 3 ci-dessous. La consommation de formaldéhyde FC (en %) est calculée à l'aide de la formule suivante :

$$FC = (C_{entrée} - C_{chambre}) / C_{entrée}$$

avec les définitions de $C_{entrée}$ et de $C_{chambre}$ étant les mêmes que celles ci-dessous pour le calcul du flux de sorption F.

Tableau 3 : Consommation en formaldéhyde FC (%)

| Réf échantillon / Durée | 4 heures | 8 heures | 1 jour | 7 jours |
|---|---|---|---|---|
| Essai 1 | 76 | 56 | 42 | 26 |
| Essai 2 | 36 | 15 | 18 | 2 |

Les résultats de flux de sorption F du formaldéhyde sont présentés au tableau 4 ci-dessous.
Le flux de sorption F est calculé selon la formule suivante :

$$F = (C_{entrée} - C_{chambre})*Qc / A$$

Avec :

F : flux de sorption en $\mu$g/m$^2$ par heure
FC : consommation de formaldéhyde en %, comme défini ci-haut
$C_{entrée}$ : concentration à l'entrée de la chambre, en $\mu$g/m$^3$
$C_{chambre}$ : concentration dans la chambre, en $\mu$g/m$^3$
Qc : flux d'air dopé en formaldéhyde dans la chambre = 0,06 m$^3$/h
A = 0,119 m$^2$ représentant la surface de l'échantillon (revêtement)

Tableau 4 : Flux de Sorption de formaldéhyde F (en $\mu$g/m$^2$ par heure)

| Réf échantillon / Durée | 4 heures | 8 heures | 1 jour | 7 jours |
|---|---|---|---|---|
| Essai 1 | 31 | 23 | 18 | 8 |
| Essai 2 | 15 | 6 | 8 | 1 |

**Revendications**

**1.** Utilisation d'une dispersion aqueuse de polymère, en particulier du polymère issu de ladite dispersion, pour le captage et piégeage irréversible d'au moins un composé volatil organique porteur d'une fonction parmi aldéhyde, cétone ou amine, de préférence composé organique volatil porteur d'une fonction aldéhyde, avec ladite dispersion ayant une température minimum de filmification TMF de 0 à 50°C, de préférence de 0 à 40°C mesurée selon la norme ISO 2115 et comprenant des particules de polymère structurées en coeur/écorce P1/P2 dur/mou, avec

- P1 étant la phase de polymère dur en coeur de ladite particule, avec une température de transition vitreuse Tg1 allant de 60 à 120°C, de préférence de 60 à 100°C et ladite phase P1 comprenant dans sa structure des unités issues d'au moins un monomère M1 possédant au moins deux insaturations éthyléniques copolymérisables et ayant une fonction d'agent réticulant et des unités issues d'au moins un monomère M2 éthyléniquement insaturé porteur d'au moins une fonction acide carboxylique et/ou anhydride carboxylique

- P2 étant la phase de polymère mou en écorce ayant une température de transition vitreuse Tg2 allant de -20 à 40°C, de préférence de -20 à 30°C, plus préférentiellement de -20 à 20°C avec P2 représentant de 40 à 85%, de préférence de plus de 50% et jusqu'à 85% en poids du poids total de P1 + P2 et comprenant dans sa structure, des unités issues d'au moins un monomère M3 porteur d'une insaturation éthylénique polymérisable et en plus d'un groupement fonctionnel uréido ou d'un groupement fonctionnel possédant un hydrogène mobile en alpha d'un carbonyle cétonique.

2. Utilisation selon la revendication 1, **caractérisée en ce que** ledit groupement fonctionnel dudit monomère M3 est sélectionné parmi les groupements uréido, acétoacétoxy ou diacétone.

3. Utilisation selon la revendication 1 ou 2, **caractérisée en ce que** ledit monomère M3 est sélectionné parmi la diacétone acrylamide (DAAM), l'acétoacétoxy éthyl (méth)acrylate (AAEM) ou l'acétoacétoxy propyl (méth)acrylate (AAPM), la N-(2-(méth)acryloyloxyéthyl)) éthylène urée (ou uréido éthyl (méth)acrylate : UMA), en particulier l'acétoacétoxy éthyl (méth)acrylate (AAEM).

4. Utilisation selon l'une des revendications 1 à 3, **caractérisée en ce que** le taux dudit monomère M3 porteur dudit groupement fonctionnel, de préférence diacétone, acétoacétoxy ou uréido, plus préférentiellement acétoacétoxy, varie de 50 à 1000 et de préférence de 100 à 700 mmoles par kg dudit polymère (P1 + P2).

5. Utilisation selon l'une des revendications 1 à 4, **caractérisée en ce que** ledit monomère M3 est présent dans ladite phase P2 à un taux en poids de 1 à 25%, de préférence de 2,5 à 25% et plus préférentiellement de 5 à 15% par rapport au poids total de P1 + P2.

6. Utilisation selon l'une des revendications 1 à 5, **caractérisée en ce que** ladite phase P2 comprend en plus, au moins un agent de transfert sélectionné parmi les mercaptans hydrophiles, en particulier portant un groupement ionique.

7. Utilisation selon l'une des revendications 1 à 6, **caractérisée en ce que** ladite phase P2 comprend au moins un deuxième agent de transfert sélectionné parmi les mercaptans hydrophobes avec un rapport en poids d'agent hydrophile sur agent hydrophobe supérieur à 1 et de préférence supérieur à 1,5.

8. Utilisation selon la revendication 7, **caractérisée en ce que** le taux global desdits premier et deuxième agents de transfert représente en poids de 0,02 à 2% et de préférence de 0,05 à 1,5% par rapport au poids total des phases P1 + P2.

9. Utilisation selon l'une des revendications 1 à 8, **caractérisée en ce que** ladite dispersion comprend en dispersion avec les particules de polymère, au moins un composé comprenant au moins une fonction hydrazine ou hydrazide.

10. Utilisation selon l'une des revendications 1 à 9, **caractérisée en ce que** ledit composé organique volatil à capter ou à piéger a une température d'ébullition sous pression atmosphérique inférieure à 250°C, de préférence inférieure à 100°C.

11. Utilisation selon l'une des revendications 1 à 10, **caractérisée en ce que** ledit composé organique volatil à capter ou piéger est une aldéhyde parmi les aldéhydes en $C_1$ à $C_8$ et en particulier le formol, l'acétaldéhyde, le propanal, l'acroléine (acrylaldéhyde), le butanal, le pentanal, l'hexanal, l'heptanal ou l'octanal, de préférence le formol, l'acétaldéhyde, l'acroléine, l'hexanal et plus préférentiellement le formol.

12. Utilisation selon l'une des revendications 1 à 11, **caractérisée en ce qu'**il s'agit du polymère issu de ladite dispersion et que ledit polymère est sous forme de film ou sous forme de revêtement, en particulier sous forme de vernis ou de peinture, plus particulièrement sous forme de peinture.

13. Utilisation selon l'une des revendications 1 à 11, **caractérisée en ce qu'**il s'agit du polymère issu de ladite dispersion et que ledit polymère est utilisé sous forme de couche fine ou de revêtement appliqué sur un substrat, en particulier sur un substrat poreux ou fibreux.

**14.** Utilisation selon l'une des revendications 1 à 11, **caractérisée en ce qu'**il s'agit du polymère issu de ladite dispersion et que ledit polymère est utilisé sous forme de sonde qualitative ou quantitative de détection dudit composé volatil, en particulier des aldéhydes et plus particulièrement du formol.

**15.** Utilisation selon l'une des revendications 1 à 13, **caractérisée en ce qu'**elle s'applique aux revêtements décoratifs.

**16.** Utilisation selon l'une des revendications 1 à 13, **caractérisée en ce qu'**elle s'applique aux revêtements de protection industriels.

**17.** Utilisation selon l'une des revendications 1 à 16, **caractérisée en ce qu'**elle concerne le captage des aldéhydes, en particulier du formol dans l'atmosphère au contact direct de la surface dudit polymère, en particulier sous forme de couche fine de polymère ou de revêtement.

**18.** Utilisation selon l'une des revendications 1 à 11, **caractérisée en ce qu'**elle concerne le captage du formol dégagé par des revêtements appliqués en sous-couche ou première couche par rapport au revêtement capteur, en particulier avec ledit revêtement capteur utilisé comme revêtement de surface.

**19.** Utilisation selon l'une des revendications 1 à 11, **caractérisée en ce qu'**elle concerne le captage du formol dégagé par un substrat et que dans ce cas ce dernier est revêtu ou imprégné d'un revêtement capteur issu de ladite dispersion de polymère.

**20.** Utilisation selon la revendication 19, **caractérisée en ce que** ledit substrat dégageant du formol est choisi parmi : bois aggloméré ou en sandwich ou contreplaqué et collé par des colles urée-formol ou mélamine-formol, textile traité ou fibres traitées avec une composition de traitement génératrice de formol.

**21.** Utilisation selon l'une des revendications 1 à 11, **caractérisée en ce qu'**elle concerne le captage du formol dégagé par un premier substrat « générateur» et que dans ce cas est appliqué en contact avec ledit substrat « générateur », un deuxième substrat « capteur » imprégné ou revêtu par ladite dispersion aqueuse de polymère ou par le polymère issu de ladite dispersion.

**22.** Utilisation selon la revendication 21, **caractérisée en ce que** ledit deuxième substrat « capteur » en contact avec ledit premier substrat « générateur » est choisi parmi : non tissés, tissus de fibres organiques ou minérales, en particulier tissus de fibres de verre, pour l'isolation ou pour la rénovation des murs intérieurs.

**23.** Utilisation selon l'une des revendications 1 à 11, **caractérisée en ce qu'**elle concerne l'imprégnation de filtres à air ou des filtres à fumée, par ladite dispersion aqueuse de polymère.

**Patentansprüche**

**1.** Verwendung einer wässrigen Polymerdispersion, insbesondere des Polymers aus der Dispersion, zum irreversiblen Abfangen und Einfangen mindestens einer flüchtigen organischen Verbindung, die eine Aldehyd-, Keton- oder Aminfunktion trägt, vorzugsweise einer flüchtigen organischen Verbindung, die eine Aldehydfunktion trägt, wobei die Dispersion eine gemäß der ISO-Norm 2115 gemessene Mindestfilmbildungstemperatur MFT von 0 bis 50 °C, vorzugsweise von 0 bis 40 °C, aufweist und Polymerteilchen mit Hart/Weich-P1/P2-Kern-Schale-Struktur umfasst, wobei

- P1 die harte Polymerphase im Kern des Teilchens mit einer Glasübergangstemperatur Tg1 im Bereich von 60 bis 120 °C, vorzugsweise von 60 bis 100 °C, ist und die Phase P1 in ihrer Struktur Einheiten, die sich von mindestens einem Monomer M1, das mindestens zwei copolymerisierbare ethylenische Ungesättigtheiten aufweist und Vernetzungsmittelfunktion hat, ableiten, und Einheiten, die sich von mindestens einem ethylenisch ungesättigten Monomer M2 mit mindestens einer Carbonsäure- und/oder Carbonsäureanhydridfunktion ableiten, umfasst,
- P2 die weiche Polymerphase in der Schale mit einer Glasübergangstemperatur Tg2 im Bereich von -20 bis 40 °C, vorzugsweise von -20 bis 30 °C, weiter bevorzugt von -20 bis 20 °C, ist, wobei P2 40 bis 85 Gew.-%, vorzugsweise mehr als 50 und bis zu 85 Gew.-% des Gesamtgewichts von P1 + P2 ausmacht und in ihrer Struktur Einheiten, die sich von mindestens einem Monomer M3 mit mindestens einer polymerisierbaren ethylenischen Ungesättigtheit sowie einer ureidofunktionellen Gruppe oder einer funktionellen Gruppe mit einem mobilen Wasserstoffatom in alpha-Position zu einem ketonischen Carbonyl ableiten, umfasst.

2. Verwendung nach Anspruch 1, **dadurch gekennzeichnet, dass** die funktionelle Gruppe des Monomers M3 aus Ureido-, Acetoacetoxy- oder Diacetongruppen ausgewählt ist.

3. Verwendung nach Anspruch 1 oder 2, **dadurch gekennzeichnet, dass** das Monomer M3 aus Diacetonacrylamid (DAAM), Acetoacetoxyethyl(meth)acrylat (AAEM) oder Acetoacetoxypropyl(meth)acrylat (AAPM), N-2-(Meth)acryloyloxyethyl))ethylenharnstoff (oder Ureidoethyl(meth)acrylat: UMA), insbesondere Acetoacetoxyethyl(meth)acrylat (AAEM), ausgewählt ist.

4. Verwendung nach einem der Ansprüche 1 bis 3, **dadurch gekennzeichnet, dass** der Anteil des Monomers M3, das die funktionelle Gruppe, vorzugsweise Diaceton, Acetoacetoxy oder Ureido, weiter bevorzugt Acetoacetoxy, trägt, von 50 bis 1000 und vorzugsweise von 100 bis 700 mmol pro kg des Polymers (P1 + P2) variiert.

5. Verwendung nach einem der Ansprüche 1 bis 4, **dadurch gekennzeichnet, dass** das Monomer M3 in der Phase P2 in einem Gewichtsanteil von 1 bis 25 %, vorzugsweise von 2,5 bis 25 % und weiter bevorzugt von 5 bis 15 %, bezogen auf das Gesamtgewicht von P1 + P2, vorliegt.

6. Verwendung nach einem der Ansprüche 1 bis 5, **dadurch gekennzeichnet, dass** die Phase P2 außerdem mindestens ein Übertragungsmittel, das aus hydrophilen Mercaptanen, insbesondere mit einer ionischen Gruppe, ausgewählt ist, umfasst.

7. Verwendung nach einem der Ansprüche 1 bis 6, **dadurch gekennzeichnet, dass** die Phase P2 mindestens ein zweites Übertragungsmittel, das aus hydrophoben Mercaptanen ausgewählt ist, umfasst, wobei das Gewichtsverhältnis von hydrophilem Mittel zu hydrophobem Mittel größer als 1 und vorzugsweise größer als 1,5 ist.

8. Verwendung nach Anspruch 7, **dadurch gekennzeichnet, dass** der Gesamtanteil des ersten und zweiten Kettenübertragungsmittels 0,02 bis 2 Gew.-% und vorzugsweise 0,05 bis 1,5 Gew.-%, bezogen auf das Gesamtgewicht der Phasen P1 + P2, beträgt.

9. Verwendung nach einem der Ansprüche 1 bis 8, **dadurch gekennzeichnet, dass** die Dispersion mindestens eine Verbindung mit mindestens einer Hydrazin- oder Hydrazidfunktion in Dispersion mit den Polymerteilchen umfasst.

10. Verwendung nach einem der Ansprüche 1 bis 9, **dadurch gekennzeichnet, dass** die abzufangende oder einzufangende flüchtige organische Verbindung einen Siedepunkt unter Normaldruck von weniger als 250 °C, vorzugsweise weniger als 100 °C, aufweist.

11. Verwendung nach einem der Ansprüche 1 bis 10, **dadurch gekennzeichnet, dass** es sich bei der abzufangenden oder einzufangenden flüchtigen organischen Verbindung um einen Aldehyd aus den $C_1$-bis $C_8$-Aldehyden und insbesondere Formaldehyd, Acetaldehyd, Propanal, Acrolein (Acrylaldehyd), Butanal, Pentanal, Hexanal, Heptanal oder Octanal, vorzugsweise Formaldehyd, Acetaldehyd, Acrolein oder Hexanal und weiter bevorzugt Formaldehyd handelt.

12. Verwendung nach einem der Ansprüche 1 bis 11, **dadurch gekennzeichnet, dass** es sich um das Polymer aus der Dispersion handelt und das Polymer in Form eines Films oder in Form einer Beschichtung, insbesondere in Form eines Lacks oder Anstrichmittels, spezieller in Form eines Anstrichmittels, vorliegt.

13. Verwendung nach einem der Ansprüche 1 bis 11, **dadurch gekennzeichnet, dass** es sich um das Polymer aus der Dispersion handelt und das Polymer in Form einer dünnen Schicht oder Beschichtung, die auf ein Substrat, insbesondere auf ein poröses oder faserförmiges Substrat, aufgebracht ist, verwendet wird.

14. Verwendung nach einem der Ansprüche 1 bis 11, **dadurch gekennzeichnet, dass** es sich um das Polymer aus der Dispersion handelt und das Polymer in Form einer qualitativen oder quantitativen Sonde zum Nachweis der flüchtigen Verbindung, insbesondere von Aldehyden und spezieller von Formaldehyd, verwendet wird.

15. Verwendung nach einem der Ansprüche 1 bis 13, **dadurch gekennzeichnet, dass** sie auf dekorative Überzüge angewendet wird.

**16.** Verwendung nach einem der Ansprüche 1 bis 13, **dadurch gekennzeichnet, dass** sie auf technische Schutzüberzüge angewendet wird.

**17.** Verwendung nach einem der Ansprüche 1 bis 16, **dadurch gekennzeichnet, dass** sie das Abfangen von Aldehyden, insbesondere von Formaldehyd, in der mit der Oberfläche des Polymers in direktem Kontakt stehenden Atmosphäre, insbesondere in Form einer dünnen Polymerschicht oder Beschichtung, betrifft.

**18.** Verwendung nach einem der Ansprüche 1 bis 11, **dadurch gekennzeichnet, dass** sie das Abfangen von Formaldehyd, der von als Unterschicht oder erste Schicht im Verhältnis zur Abfangbeschichtung aufgebrachten Beschichtungen freigesetzt wird, insbesondere wobei die Abfangbeschichtung als Oberflächenbeschichtung verwendet wird, betrifft.

**19.** Verwendung nach einem der Ansprüche 1 bis 11, **dadurch gekennzeichnet, dass** sie das Abfangen von Formaldehyd, der von einem Substrat freigesetzt wird, betrifft und in diesem Fall letzteres mit einer Abfangbeschichtung, die sich von der Polymerdispersion ableitet, beschichtet oder imprägniert ist.

**20.** Verwendung nach Anspruch 19, **dadurch gekennzeichnet, dass** das Formaldehyd freisetzende Substrat ausgewählt ist aus: Pressholz, Holz mit Sandwichstruktur oder Sperrholz, das mit Harnstoff-Formaldehyd- oder Melamin-Formaldehyd-Klebstoffen verklebt ist, und mit einer Formaldehyd erzeugenden Behandlungszusammensetzung behandelten Textilien oder Fasern.

**21.** Verwendung nach einem der Ansprüche 1 bis 11, **dadurch gekennzeichnet, dass** sie das Abfangen von Formaldehyd, der von einem ersten "Erzeuger"-Substrat freigesetzt wird, betrifft und in diesem Fall in Kontakt mit dem "Erzeuger"-Substrat ein zweites "Abfang"-Substrat, das mit der wässrigen Polymerdispersion oder dem Polymer aus der Dispersion imprägniert oder beschichtet ist, angewendet wird.

**22.** Verwendung nach Anspruch 21, **dadurch gekennzeichnet, dass** das zweite "Abfang"-Substrat in Kontakt mit dem ersten "Erzeuger"-Substrat aus Vliesstoffen, textilen Flächengebilden aus organischen oder anorganischen Fasern, insbesondere textilen Flächengebilden aus Glasfasern, zur Isolierung oder Renovierung von Innenwänden ausgewählt ist.

**23.** Verwendung nach einem der Ansprüche 1 bis 11, **dadurch gekennzeichnet, dass** sie die Imprägnierung von Luftfiltern oder Rauchfiltern mit der wässrigen Polymerdispersion betrifft.

**Claims**

**1.** Use of an aqueous polymer dispersion, in particular the polymer derived from said dispersion, to irreversibly capture and trap at least one organic volatile compound bearing a function among aldehyde, ketone or amine, preferably volatile organic compound bearing an aldehyde function, with said dispersion having a minimum film-forming temperature (MFFT) of 0 to 50 °C, preferably 0 to 40 °C, measured according to the standard ISO 2115 and comprising polymer particles of hard core P1/soft shell P2 structure, with

- P1 being the hard polymer phase in the core of said particle, with a glass transition temperature Tg1 of 60 to 120 °C, preferably 60 to 100 °C, and said phase P1 comprising in its structure units from at least one monomer M1 having at least two copolymerisable ethylenic unsaturations and having a role of cross-linker and units from at least one ethylenically unsaturated monomer M2 bearing at least one carboxylic acid and/or carboxylic anhydride function
- P2 being the soft polymer phase in the shell having a glass transition temperature Tg2 of -20 to 40 °C, preferably -20 to 30 °C, more preferably -20 to 20 °C, with P2 representing 40% to 85% by weight, preferably more than 50% and up to 85% by weight, of the total weight of P1 + P2 and comprising in its structure units from at least one monomer M3 bearing a polymerisable ethylenic unsaturation and, in addition, an ureido functional group or a functional group having a mobile hydrogen alpha to a ketonic carbonyl.

**2.** Use as claimed in Claim 1, **characterised in that** said functional group of said monomer M3 is selected from the groups ureido, acetoacetoxy or diacetone.

3. Use as claimed in Claim 1 or 2, **characterised in that** said monomer M3 is selected from diacetone acrylamide (DAAM), acetoacetoxyethyl (meth)acrylate (AAEM) or acetoacetoxypropyl (meth)acrylate (AAPM), N-(2-(meth)acryloyloxyethyl) ethylene urea (or ureidoethyl (meth)acrylate: UMA), in particular acetoacetoxyethyl (meth)acrylate (AAEM).

4. Use as claimed in one of claims 1 to 3, **characterised in that** the level of said monomer M3 bearing said functional group, preferably diacetone, acetoacetoxy or ureido, more preferably acetoacetoxy, varies from 50 to 1000 and preferably from 100 to 700 mmol per kg of said polymer (P1 + P2).

5. Use as claimed in one of claims 1 to 4, **characterised in that** said monomer M3 is present in said phase P2 at a level of 1% to 25% by weight, preferably 2.5% to 25% by weight, and more preferably 5% to 15% by weight relative to the total weight of P1 + P2.

6. Use as claimed in one of claims 1 to 5, **characterised in that** said phase P2 further comprises at least one transfer agent selected from hydrophilic mercaptans, in particular bearing an ionic group.

7. Use as claimed in one of claims 1 to 6, **characterised in that** said phase P2 comprises at least a second transfer agent selected from hydrophobic mercaptans having a weight ratio of hydrophilic agent to hydrophobic agent greater than 1 and preferably greater than 1.5.

8. Use as claimed in Claim 7, **characterised in that** the overall level of said first and second transfer agents represents 0.02% to 2% by weight and preferably 0.05% to 1.5% by weight relative to the total weight of the phases P1 + P2.

9. Use as claimed in one of claims 1 to 8, **characterised in that** said dispersion comprises in dispersion with the polymer particles at least one compound comprising at least one hydrazine or hydrazide function.

10. Use as claimed in one of claims 1 to 9, **characterised in that** said volatile organic compound to be captured or trapped has a boiling point at atmospheric pressure below 250 °C, preferably below 100 °C.

11. Use as claimed in one of claims 1 to 10, **characterised in that** said volatile organic compound to be captured ortrapped is an aldehyde among $C_1$ to $C_8$ aldehydes and in particular formaldehyde, acetaldehyde, propanal, acrolein (acrylaldehyde), butanal, pentanal, hexanal, heptanal or octanal, preferably formaldehyde, acetaldehyde, acrolein, hexanal and more preferably formaldehyde.

12. Use as claimed in one of claims 1 to 11, **characterised in that** it is the polymer derived from said dispersion and that said polymer is in film form or in coating form, in particular in varnish or paint form, more particularly in paint form.

13. Use as claimed in one of claims 1 to 11, **characterised in that** it is the polymer derived from said dispersion and that said polymer is used in the form of a thin layer or a coating applied on a substrate, in particular on a porous or fibrous substrate.

14. Use as claimed in one of claims 1 to 11, **characterised in that** it is the polymer derived from said dispersion and that said polymer is used in the form of a qualitative or quantitative probe for detecting said volatile compound, in particular aldehydes and more particularly formaldehyde.

15. Use as claimed in one of claims 1 to 13, **characterised in that** it applies to decorative coatings.

16. Use as claimed in one of claims 1 to 13, **characterised in that** it applies to industrial protective coatings.

17. Use as claimed in one of claims 1 to 16, **characterised in that** it concerns the capture of aldehydes, in particular the formaldehyde in the atmosphere in direct contact with the surface of said polymer, in particular in the form of a thin layer of polymer or coating.

18. Use as claimed in one of claims 1 to 11, **characterised in that** it concerns the capture of the formaldehyde emitted by coatings applied as a sublayer or first layer relative to the capture coating, in particular with said capture coating used as a surface coating.

19. Use as claimed in one of claims 1 to 11, **characterised in that** it concerns the capture of the formaldehyde emitted by a substrate and that in this case the latter is coated or impregnated with a capture coating derived from said polymer dispersion.

**20.** Use as claimed in Claim 19, **characterised in that** said formaldehyde-emitting substrate is selected from: pressed wood, sandwich-structured wood or plywood glued together using urea-formaldehyde or melamine-formaldehyde adhesives, treated textile or fibres treated with a formaldehyde-generating treatment composition.

**21.** Use as claimed in one of claims 1 to 11, **characterised in that** it concerns the capture of the formaldehyde emitted by a first "generator" substrate and that in this case it is applied in contact with said "generator" substrate, a second "capture" substrate impregnated or coated with said aqueous polymer dispersion or with the polymer derived from said dispersion.

**22.** Use as claimed in claim 21, **characterised in that** said second "capture" substrate in contact with said first "generator" substrate is selected from: non-woven fabrics, organic or inorganic fibre fabrics, in particular glass fibre fabrics, for insulating or renovating interior walls.

**23.** Use as claimed in one of claims 1 to 11, **characterised in that** it concerns the impregnation of air filters or smoke filters by said aqueous polymer dispersion.

FIG. 1

Image AFM du film obtenu avec la dispersion de l'essai 1

**EP 3 237 093 B1**

## RÉFÉRENCES CITÉES DANS LA DESCRIPTION

**Documents brevets cités dans la description**

- WO 2008073212 A
- EP 2496649 A
- WO 2014191573 A
- EP 2808038 A
- WO 2012078886 A